(19) Europäisches Patentamt
European Patent Office
Office européen des brevets

(11) **EP 1 653 685 B1**

(12) **EUROPEAN PATENT SPECIFICATION**

(45) Date of publication and mention
of the grant of the patent:
**26.11.2008 Bulletin 2008/48**

(51) Int Cl.:
***H04L 12/56*** *(2006.01)*

(21) Application number: **05256617.1**

(22) Date of filing: **25.10.2005**

(54) **Congestion control for the management of service level agreements in switched networks**

Überlastregelung zur Verwaltung von Dienststufenübereinkommen in vermittelten Netzen

Contrôle de congestion pour gérer les accords de niveau de service dans des réseaux commutés

(84) Designated Contracting States:
**DE FR GB**

(30) Priority: **02.11.2004 US 979349**

(43) Date of publication of application:
**03.05.2006 Bulletin 2006/18**

(73) Proprietor: **Lucent Technologies Inc.**
**Murray Hill NJ 07974-0636 (US)**

(72) Inventors:
• **Van Bemmel, Jeroen**
**2312 RD Leiden (NL)**
• **Heer, Arie Johannes**
**7552 KJ Hengelo (NL)**
• **Malhotra, Richa**
**7511 DG Enschede (NL)**

(74) Representative: **Sarup, David Alexander et al**
**Alcatel-Lucent Telecom Limited**
**Unit 18, Core 3, Workzone**
**Innova Business Park**
**Electric Avenue**
**Enfield**
**EN3 7XU (GB)**

(56) References cited:
**US-A1- 2003 154 272** **US-A1- 2003 210 653**

• **HNATYSHIN ET AL: "Avoiding congestion through dynamic load control" PROCEEDINGS OF THE SPIE, vol. 4526, 2001, pages 309-323, XP009060578 US ISSN: 0277-786X**
• **XICHENG LIU ET AL: "Generic congestion control through network coordination" COMMUNICATION SYSTTEMS, 2002. ICCS 2002. THE 8TH INTERNATIONAL CONFERENCE ON NOV. 25-28, 2002, PISCATAWAY, NJ, USA, IEEE, vol. 2, 25 November 2002 (2002-11-25), pages 903-907, XP010629352 ISBN: 0-7803-7510-6**

**EP 1 653 685 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

This invention is related to methods and apparatus for managing service level agreements (SLAs) in switched networks, such as switched Ethernet networks.

## Background of the Invention

An advantage of Ethernet (or IEEE 802.3) networks is their simplicity and low cost. This has led to wide acceptance of the standard (or standards) and a desire to extend it from local area networks (LAN) to metropolitan area networks (MAN) and even to wide area networks (WAN). For such an expansion to be practical, the network needs to be able to provide various qualities of service as required by various customers and to meet service level agreements.

From the point of view of a network operator, a problem with SLAs is to police them, or, in other words, to make sure that customers do not overload the system by sending much more traffic over the network than the agreed amount. Then, the network can be provisioned to accommodate the agreed levels of traffic. When it becomes necessary, because of congestion in the network, packets are dropped, but the operator needs to be able to ensure, in so far as it is possible, that packets are not dropped which are in compliance with a customer's SLA. On the other hand, the operator will wish to accommodate traffic in excess of a customer's SLA when it is possible to do so without adversely affecting the ability to meet the SLAs of other customers.

Policing of SLAs is normally done by having, for each customer, a committed information rate ($CIR$) and a peak information rate ($PIR$). Generally speaking, the idea is to guarantee packets within the $CIR$ and to try and accommodate packets up to the $PIR$ whenever possible. Generally this is done by using a "token bucket" algorithm or a "leaky bucket" algorithm, which classifies and marks packets according to whether they are within the $CIR$, exceed the $CIR$ but are within the $PIR$, or exceed the $PIR$. On the basis of such classification and marking, congestion control measures can be taken. The aim of such congestion measures would be to ensure that, in times of congestion, only marked packets are dropped and un-marked packets pass through.

The problem remains, how to take advantage of the statistical gain afforded by networks such as Ethernet networks whilst making sure that, even when the network is congested, transport of packets within customers' $CIR$s is guaranteed in so far as it is possible; that is to say, how to ensure that in times of congestion, only marked packets are dropped.

One possibility might be to treat all traffic that exceeds a $CIR$ as "best effort" traffic and place it in a low priority queue. Packets in the low priority queue could then be dropped in times of congestion. This, however, has the disadvantage that it could lead to mis-ordered packets. In particular, it would not work for an Ethernet network.

Another possibility might be to have thresholds on queues in the network, and, when the threshold is exceeded, to allow only those packets that are within their $CIR$ to enter the queue, dropping the others. This, however, would not guarantee that all packets within their $CIR$ would be allowed, since the queue would already contain packets marked as not complying, and they would be allowed to remain.

Another possibility might be to ensure that in times of congestion, packets marked as exceeding their $CIR$ are dropped before any others. This, however, would mean that packets would have to be dropped from within a queue. Most switches and routers uses a fist-in-first-out (FIFO) structure for their input and output buffers, which means that operations have to be carried out at the head or the tail of the queue. Enabling packets to be deleted from within a queue would mean that this FIFO structure, which is simple to implement and maintain, and guarantees packet ordering, could no longer be used. Thus, a considerable increase in complexity would be involved.

Furthermore, all of these possibilities have the disadvantage that they work by dropping packets, which can affect end-user traffic streams. $CIR$ is a crude measure of quality of service, and a congestion control system that works exclusively by dropping packets runs the risk that, while customers receive their $CIR$, the end users, with higher-layer applications, do not receive their desired quality of service. For example, a single end-user application flow could include both marked and unmarked packets at the ingress to a MAN, owing to aggregation of many such flows. It is better to introduce flow controls to restrict access to the network and thus to minimize the necessity of dropping packets from within the network. In addition, the change in restriction should preferably be communicated to the customer access network which can further limit the number of ongoing end-user flows.

It is known from a paper by Hnatyshin et al. entitled "Avoiding congestion through dynamic load control" Proceedings Of the SPIE, vol. 4526, 2001, pages 309-323, XP009060578 US ISSN: 0277-786X to provide a method carried out at an ingress node of a switched network.

## Summary of the Invention

The present invention is characterised over the disclosure of the above-mentioned Hnatyshin paper in that said first criteria comprise a committed information rate and a first permitted information rate, greater than the committed information rate, and wherein said second criteria comprise said committed information rate and a second permitted information rate, less than the first permitted information rate but greater than the committed information rate,
wherein said first criteria also comprise a first permitted burst size and said second criteria comprise a second permitted burst size, lower than the first permitted burst size.

In an exemplary embodiment of the invention, when a switch detects congestion at one of its inputs, it floods a congestion control message back to the ingress points of the network connected to that input, indicating congestion. An ingress node receiving such a message then changes the criteria by which it restricts access to the network. For example it may limit traffic to traffic within its *CIR* only, or, if it implements a *CIR* and a *PIR,* it may do so more restrictively, by reducing the traffic admitted which exceeds its *CIR* for example, it may adopt an effective *PIR* which is less than the normal *PIR,* such as

$$PIR^{\bullet} = \tfrac{1}{2}(PIR + CIR)$$ or, more generally, $PIR^* = \alpha PIR + (1 - \alpha)CIR$ where $\alpha < 1$. When the switch detects that the congestion has subsided, it floods a further congestion control message to the ingress points connected to the input, indicating that the congestion has subsided. An ingress node receiving such a message then changes the criteria back to those which it normally applies.

## Brief Description of the Drawing

Some embodiments of the invention will now be described by way of example with reference to the accompanying drawings, in which:

FIG.1 shows a simple metropolitan network in which the present invention may be practiced;
FIG. 2 shows a known policing arrangement at an ingress port of a network;
FIG. 3 shows a known anti-congestion arrangement at an input port of a node;
FIG. 4 shows another known policing arrangement at an ingress port of a network, arranged to restrict access to the network;
FIG. 5 shows, in conceptual form, a meter for a policing arrangement as shown in FIG. 4;
FIG. 6 shows an anti-congestion arrangement at an input port of a node which embodies the present invention;
FIG. 7 shows a policing arrangement at an ingress port of a network which embodies the present invention;
FIG. 8 shows, in conceptual form, a meter for a policing arrangement as shown in FIG. 7; and
FIG. 9 shows, in conceptual form, an alternative meter for a policing arrangement as shown in FIG. 7.

## Detailed Description

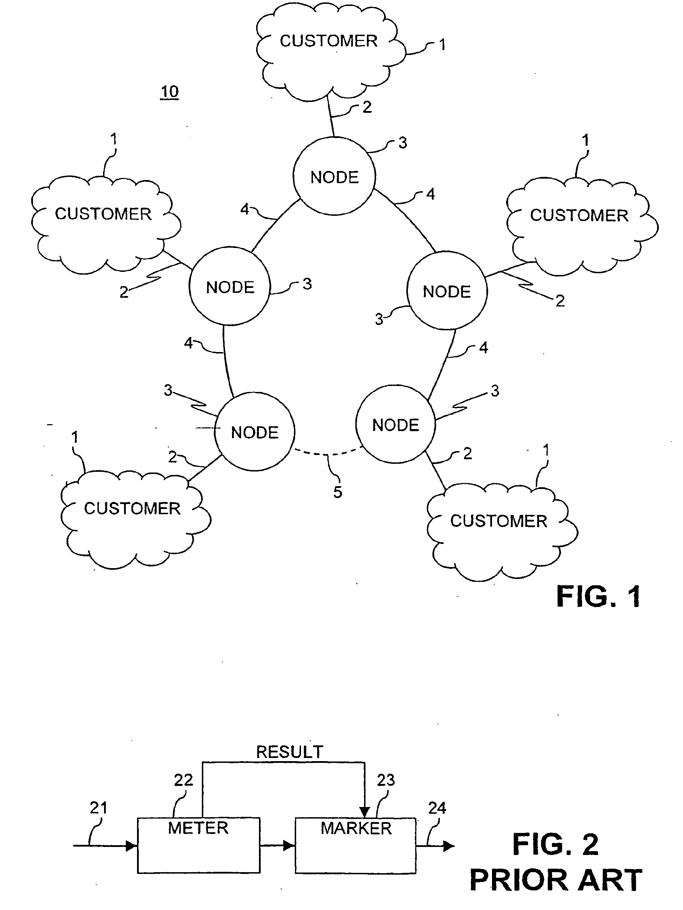

FIG. 1 shows an Ethernet metropolitan area network (MAN) 10 interconnecting customer sites 1.

Each customer site 1 is connected via an ingress/egress link 2 to a node 3 of the network 10. The nodes 3 are interconnected by internal links 4. A further internal link 5 is also present but, as the network 10 is currently configured, is not used, because the spanning tree algorithm, which is a well-known part of the Ethernet standard, sets up the nodes to route packets via a subset of the links which constitute a spanning tree of the network, meaning that each node is connected to each other node by one unique path, and there are no loops. Such an arrangement provides redundancy, so that if one of the links 4 goes out of service, the network can reconfigure itself by running the spanning tree algorithm once again to set up a new spanning tree that does not included the out-of-service link.

The network shown in FIG. 1 is a simple one. It is possible for more than one customer 1 to be connected to the same node 3 by respective ingress/egress links, and it is possible for a network to include internal nodes that are not directly connected to any customer. The topology of a network may be such that a plurality of links are excluded by the spanning tree algorithm.

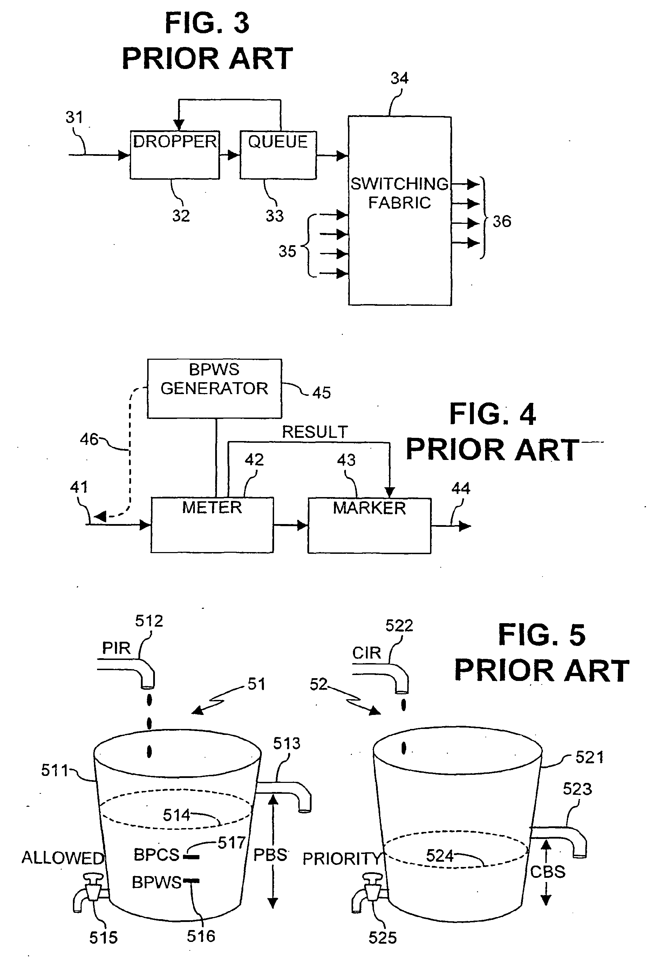

FIG. 2 shows a policing arrangement at an ingress port of a node 3 of FIG. 1. A packet stream 21 from a customer is applied to a meter 22 which tests the packet stream against criteria such as peak information rate *PIR*, committed information rate *CIR* and their associated burst sizes. The packet stream and the results of the tests are applied to a marker 23 which marks the packets to provide a marked packet stream 24. The marking of the packets is conventionally termed "green", "yellow" or "red". If a packet exceeds the *PIR* allotted to the customer the packet is marked "red". If it does not exceed the *CIR* it is marked "green". Otherwise, it is marked "yellow". Details of an exemplary marking scheme will become apparent from the discussion below with reference to FIG. 5. The markings of the packets indicate the priority they should be afforded according to the customer's SLA.

FIG. 3 shows a known arrangement at an input 31 of a switching node. The marked packet stream received at the input 31 is applied to a dropper 32 before being supplied to a queue 33 at an input to a switching fabric 34. Information about the state of the queue is supplied to the dropper, indicating whether the length of the queue exceeds a threshold, thus showing signs of congestion. The dropper 32 drops packets marked "red" from the packet stream and, if the threshold is exceeded, also drops packets marked "yellow". Thus, the packets that were in excess of the customer's *PIR* are dropped whether or not the switch is congested, and those that are within the *PIR,* but exceed the *CIR* are dropped if the switch is congested. If the queue is actually full, no further packets can be added, so all packets are dropped, regardless of their marking.

Similar dropper and queue arrangements may be included in other inputs 35 to the switching fabric 34, and in the outputs 36.

The arrangement of FIG. 3 protects the switch against congestion, but does so exclusively by dropping packets. It applies a priority criterion, so that "green" packets are less likely to be dropped than "yellow" packets, and "red" packets are always dropped anyway, but since, once they are in the queue 33, packets are safe from being dropped, whatever their "color", it is still possible that "green" packets will be dropped while "yellow" packets that are already waiting in the queue are kept.

FIG. 4 shows an arrangement which is a variant of the arrangement of FIG. 2 to restrict access to the network so that fewer packets need to be dropped. Such an arrangement is described in US Patent Application, publication no. US 2002/0031091 of van Everdingen. In this arrangement, as well as providing the result of the comparison tests to the marker 43, the meter 42 tests the information rate against a threshold and, where the threshold is exceeded, applies a signal to a back pressure warning signal (BPWS) generator 54, which sends a BPWS 46 back to the customer. The BPWS may take the form of an Ethernet PAUSE frame or, in the case of a half-duplex connection, may consist of a pre-emptive signal continuously applied to the connection, thus preventing further access because of the carrier sensing multiple access with collision detection (CSMA/CD) protocol. The BPWS signal may include a time-to-wait value indicating the length of the interval during which further packets are not to be sent, and/or it may be followed, when the meter 42 indicates that the information rate from the customer has sufficiently subsided, by a back pressure clearance signal (BPCS) indicating that transmission of packets may be resumed. In the case of an Ethernet PAUSE frame, such a frame includes a time field which indicates the time-to-wait value, and a BPCS may consist of a further PAUSE frame with the time field indicating a time-to-wait value of zero. With this arrangement, when the meter shows that the information rate is in danger of exceeding the agreed PIR, so that packets are likely to be dropped, access to the network is restricted. Thus, the necessity for packets to be dropped is reduced somewhat. However, congestion may still occur at switches within the network, and packets may still have to be dropped.

FIG. 5 illustrates, in conceptual form an algorithm which may be used by the meter 42. The algorithm is implemented electronically, by means of counters, which may exist as discrete components or as software components, but such algorithms are frequently described as "token bucket" algorithms and the bucket analogy, which provides a useful intuitive view of the algorithm, is used in FIG. 5 and in the following description.

The algorithm consists of two parts, 51 and 52. The first part 51 tests the information rate against the PIR and the second part 52 tests it against the CIR. The first part 51 maintains a first token bucket (counter) 511 into which tokens are added at a rate determined by the PIR, represented by the first input pipe 512. The first token bucket 511 has a maximum capacity of PBS, represented by the first overflow pipe 513, which allows a maximum burst size within the PIR. At the start, the first token bucket 511 is full. When a packet of length B arrives, the level 514 in the first token bucket 511 is examined, and if it is less than B, the packet is marked "red". If the level 514 is greater than or equal to B, B tokens are removed from the bucket, as represented by the first outlet tap 515. In this case, the packet is allowed, and is marked "yellow" or "green" depending on the result of the second part 52 of the algorithm.

The second part 52 of the algorithm maintains a second token bucket 521 into which tokens are added at a rate determined by the CIR, represented by the second input pipe 522. The second token bucket has a maximum capacity of CBS, represented by the second overflow pipe 523. At the start the second token bucket 521 is full. When a packet of length B arrives, the level 524 in the second token bucket 521 is examined, and if it is greater than or equal to B, the packet is marked "green" and B tokens are removed from the bucket, as represented by the second outlet tap 525. If it is less than B, and the packet is allowed by the first part 51 of the algorithm, the packet is marked "yellow".

As so far described, the algorithm is as described by the Internet Engineering Task Force (IETF) request for comment (RFC) number 2698 'A Two Rate Three Color Marker' by J. Heinanen and R. Guerin for an arrangement as shown in FIG. 2. For use in an arrangement as shown in FIG. 4, it is modified in that the first token bucket has two thresholds, a BPWS threshold 516 and a BPCS threshold 517. When the level 514 in the first token bucket 511 falls below the BPWS threshold 516 the meter 42 sends a signal to the BPWS generator 45 causing it to send a BPWS signal back to the customer. Then, when the level 514 reaches the BPCS threshold 517 the meter 42 sends a signal to the BPWS generator causing it to send a BPCS signal to the customer or, in the case of a half-duplex connection, to stop sending a continuous pre-emptive BPWS signal.

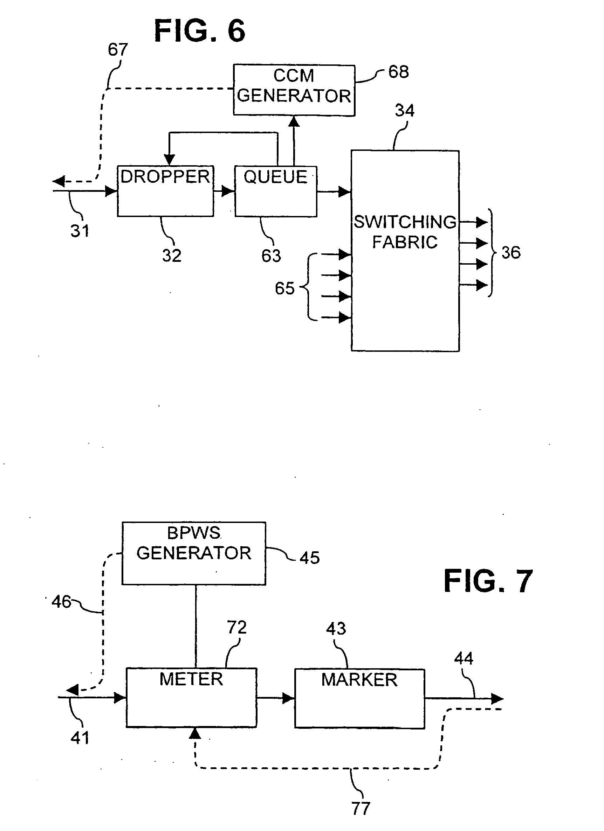

FIG. 6 shows a modification of the arrangement of FIG. 3, and illustrates one embodiment of the present invention. In addition to the packet dropping function described with reference to FIG. 3, when the length of the queue reaches a threshold a special congestion control message (CCM) 67 produced by a CCM generator 68 is flooded back to all the ingress points of the network connected to the input 31 indicating a congestion state. When the queue length falls below a second threshold, the CCM generator 68 floods a further special CCM indicating the end of the congestion state. It is important to note that the CCMs are flooded; they are not, like the BPWSs of the arrangement of FIG. 4, point-to-point signals.

FIG. 7 shows a modification of the arrangement of FIG. 4 at an ingress point of the network, and illustrates another embodiment of the invention. The meter 72 is arranged to respond to the receipt of a CCM 77 from within the network by modifying the algorithm which it executes so as to restrict access to the network according to stricter criteria. The BPWS arrangement as it is used at an ingress point of the network obviates in any case the need for a "red" classification of packets; the BPWS is used to prevent packets in excess of the *PIR* from being sent to the network. With the stricter criteria, the BPWS is used also b restrict access to the network for at least some packets in excess of the *CIR* but within the *PIR* during periods of congestion.

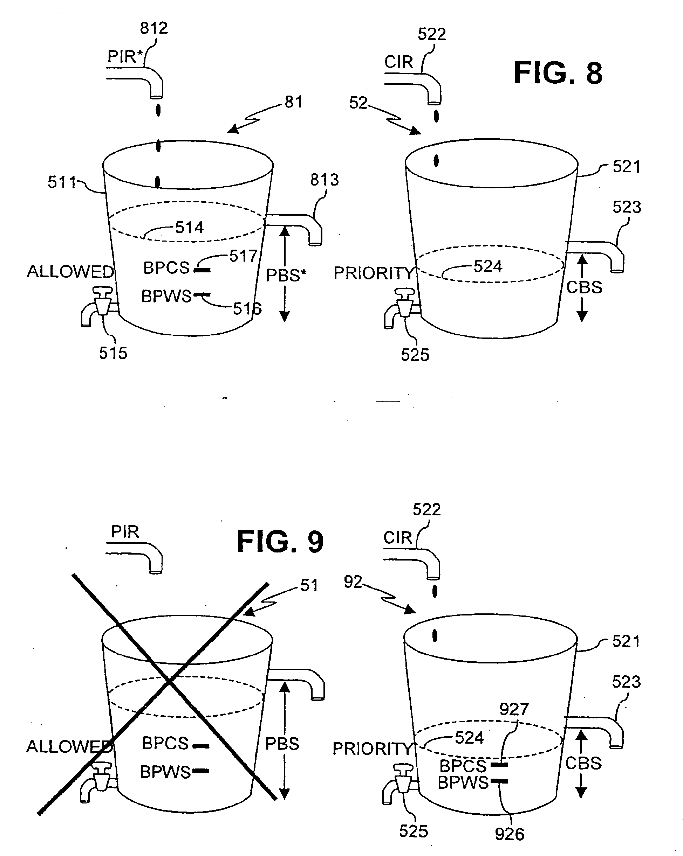

FIG. 8 shows one modification of the algorithm of FIG. 5 to apply stricter criteria according to another embodiment of the invention. As shown in FIG. 8, the first part 81 of the algorithm is modified so that the rate at which tokens are added to the first bucket 511 is reduced from the rate determined by the *PIR* as illustrated by the input pipe 512 of FIG. 5 to a lower rate determined by a modified *PIR*, *PIR** as illustrated by the input pipe 812 of FIG. 8. Also, preferably, the maximum level of the first bucket 511 is reduced from PBS to a lesser value PBS* as illustrated by the overflow pipe 813. The criteria applied by the first part 81 of the algorithm are still less strict than those applied by the second part 52, but they are stricter than those applied by the first part 51 of the unmodified algorithm of FIG. 5. As an example, *PIR** may be given by $PIR^{*} = \frac{1}{2}(PIR + CIR)$ or, more generally,

$$PIR^{*} = \alpha PIR + (1-\alpha)CIR$$

where $\alpha < 1$.

FIG. 9 shows an alternative modification of the algorithm of FIG. 5 according to another embodiment of the invention which applies stricter criteria. As shown in FIG. 9 the first part 51 of the algorithm is no longer used (it is shown as being crossed out). Instead, packets are only admitted if they satisfy the *CIR* criterion. In this case, the second part 92 of the algorithm is modified in that BPWS and BPCS thresholds 926, 927 are applied to the level 524 in the second token bucket 521.

In the claims hereof, any element expressed as a means for performing a specified function is intended to encompass any way of performing that function including, for example, a) a combination of circuit elements which performs that function or b) software in any form, including firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent to those shown herein.

**Claims**

1. A method carried out at an ingress node (3) of a switched network (10) comprising:

    monitoring customer (1) data rates for data entering the network, comparing said customer data rates against first customer-specific criteria; upon a customer's data rate exceeding a respective criterion, sending a back pressure warning signal (46) to said customer; and upon receipt of a congestion control message (77) indicating congestion within the network, changing said criteria to second criteria, more restrictive than said first criteria, said first criteria comprise a committed information rate, CIR, and a first permitted information rate, PIR, greater than the committed information rate, and wherein said second criteria comprise said committed information rate, CIR, and a second permitted information rate, PIR*, less than the first permitted information rate but greater than the committed information rate,

   wherein said first criteria also comprise a first permitted burst size, PBS, and said second criteria comprise a second permitted burst size PBS*, lower than the first permitted burst size.

2. Apparatus for use in an ingress node (3) of a switched network (10) comprising:

    means for monitoring customer (1) data rates for data entering the network and comparing said customer data rates against first customer-specific criteria; means (45) responsive to a customer's data rate exceeding a respective criterion for sending a back pressure warning signal (46) to said customer; and means (72) responsive to receipt of a congestion control message (77) indicating congestion within the network for changing said criteria to second criteria, more restrictive than said first criteria, said first criteria comprise a committed information rate, CIR, and a first permitted information rate, PIR, greater than the committed information rate, and wherein said second criteria comprise said committed information rate, CIR, and a second permitted information rate, PIR*, less than the first permitted information rate but greater than the committed information rate, and

   wherein said first criteria also comprise a first permitted burst size, PBS, and said second criteria comprise a second permitted burst size, PBS*, lower than the first permitted burst size.

## Patentansprüche

1. Ein Verfahren zur Anwendung an einem Eingangsknoten (3) in einem vermittelten Netzwerk (10), umfassend:

   Überwachen von Kundendatenraten (1) für in das Netzwerk einfließende Daten, Vergleichen der besagten Kundendatenraten mit ersten kundenspezifischen Kriterien;
   wenn die Datenrate des Kunden ein entsprechendes Kriterium überschreitet, Senden eines Rückstau-Warnsignals (46) an den besagten Kunden; und
   nach Erhalten einer Stausteuerungsnachricht (77), welche einen Stau innerhalb des Netzwerks meldet, Ändern der besagten Kriterien in zweite Kriterien, welche restriktiver als die besagten ersten Kriterien sind;
   die besagten ersten Kriterien umfassen eine festgelegte Datenrate, CIR, und eine erste zulässige Datenrate, PIR, welche höher ist als die festgelegte Datenrate, und wobei die besagten zweiten Kriterien die besagte festgelegte Datenrate, CIR, und eine zweite zulässige Datenrate, PIR*, welche niedriger als die erste zulässige Datenrate, jedoch höher als die festgelegte Datenrate ist, umfassen,

   wobei die besagten ersten Kriterien ebenfalls eine erste zulässige Burst-Größe, PBS, umfassen, und die besagten zweiten Kriterien eine zweite zulässige Burst-Größe, PBS*, welche kleiner als die erste zulässige Burst-Größe ist, umfassen.

2. Einrichtung zur Anwendung in einem Eingangsknoten (3) in einem vermittelten Netzwerk (10), umfassend:

   Mittel zum Überwachen von Kundendatenraten (1) für in das Netzwerk einfließende Daten und zum Vergleichen der besagten Kundendatenraten mit ersten kundenspezifischen Kriterien;
   Mittel (45) zum Senden eines Rückstau-Warnsignals (46) an den besagten Kunden, wenn die Datenrate des Kunden ein entsprechendes Kriterium überschreitet; und
   Mittel (72) zum Ändern der besagten Kriterien in zweite Kriterien, welche restriktiver sind als die besagten ersten Kriterien, wenn eine Stausteuerungsnachricht (77), welche einen Stau innerhalb des Netzwerks meldet, erhalten wird;
   die besagten ersten Kriterien umfassen eine festgelegte Datenrate, CIR, und eine erste zulässige Datenrate, PIR, welche höher ist als die festgelegte Datenrate, und wobei die besagten zweiten Kriterien die besagte festgelegte Datenrate, CIR, und eine zweite zulässige Datenrate, PIR*, welche niedriger als die erste zulässige Datenrate, jedoch höher als die festgelegte Datenrate ist, umfassen,

wobei die besagten ersten Kriterien ebenfalls eine erste zulässige Burst-Größe, PBS, umfassen, und die besagten zweiten Kriterien eine zweite zulässige Burst-Größe, PBS*, welche niedriger als die erste zulässige Burst-Größe ist, umfassen.

## Revendications

1. Procédé exécuté au niveau d'un noeud d'entrée (3) d'un réseau commuté (10) comprenant :

   la surveillance des débits de données de clients (1) pour les données entrant dans le réseau, comparer lesdits débits de données de clients par rapport aux premiers critères spécifiques aux clients ;
   lorsqu'un débit de données du client dépasse un critère respectif, l'envoi d'un signal d'alarme de contre-pression (46) audit client ; et
   lors de la réception d'un message de contrôle de congestion (77) indiquant la congestion à l'intérieur du réseau, le changement desdits critères en seconds critères, plus restrictifs que lesdits premiers critères,
   lesdits premiers critères comprennent un débit d'information garanti, CIR, et un premier débit d'information autorisé, PIR, supérieur au débit d'information garanti, et dans lequel lesdits seconds critères comprennent lesdits débits d'information garantis, CIR, et un second débit d'information autorisé, PIR*, inférieur au premier débit d'information autorisé mais supérieur au débit d'information garanti,

   dans lequel lesdits premiers critères comprennent également une première taille de rafale autorisée, PBS, et lesdits seconds critères comprennent une seconde taille de rafale autorisée, PBS *, inférieure à la première taille de rafale autorisée.

2. Appareil destiné à être utilisé dans un noeud d'entrée (3) d'un réseau commuté (10) comprenant :

   des moyens destinés à surveiller les débits de données de clients (1) pour les données entrant dans le réseau et à comparer lesdits débits de données de clients par rapport aux premiers critères spécifiques aux clients ;
   des moyens (45) réagissant au débit de données du client qui dépasse un critère respectif destinés à envoyer un signal d'alarme de contre-pression (46) audit client ; et
   des moyens (72) réagissant à la réception d'un message de contrôle de congestion (77) indiquant la congestion à l'intérieur du réseau destinés à changer lesdits critères en seconds critères, plus restrictifs que lesdits premiers critères,
lesdits premiers critères comprennent un débit d'information garanti, CIR, et un premier débit d'information autorisé, PIR, supérieur au débit d'information garanti, et

dans lequel lesdits seconds critères comprennent ledit débit d'information garanti, CIR, et un second débit d'information autorisé, PIR*, inférieur au premier débit d'information autorisé mais supérieur au débit d'information garanti, et
dans lequel lesdits premiers critères comprennent également une première taille de rafale autorisée, PBS, et lesdits seconds critères comprennent une seconde taille de rafale autorisée, PBS*, inférieure à la première taille de rafale autorisée.

**FIG. 1**

**FIG. 2**
**PRIOR ART**

# FIG. 3
# PRIOR ART

# FIG. 4
# PRIOR ART

# FIG. 5
# PRIOR ART

# FIG. 6

# FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020031091 A


**Non-patent literature cited in the description**

- Avoiding congestion through dynamic load control. Proceedings Of the SPIE. 2001, vol. 4526, 309-323